# EUROPEAN PATENT SPECIFICATION

(11) **EP 3 791 762 B1**
(45) Date of publication and mention of the grant of the patent: **12.10.2022**
(21) Application number: 20801136.1
(22) Date of filing: 09.03.2020
(51) Int. Cl.: A47J 31/36, A47J 31/40, A47J 31/44

(54) **BEVERAGE BREWING STRUCTURE AND BEVERAGE MACHINE**
BRÜHVORRICHTUNG FÜR GETRÄNKE UND GETRÄNKEMASCHINE
STRUCTURE D'INFUSION DE BOISSON ET MACHINE À BOISSONS

(30) Priority: 04.07.2019 CN 201910600212
(43) Date of publication of application: 17.03.2021
(73) Proprietor: CINO Technology (shenzhen) Limited, Shenzhen, Guangdong 518104 (CN)
(72) Inventor: ZHANG, Yuanxian, Shenzhen, Guangdong 518104 (CN); LI, Ke, Shenzhen, Guangdong 518104 (CN); LI, Chengda, Shenzhen, Guangdong 518104 (CN)
(74) Representative: Petculescu, Ana-Maria
(86) International application number: PCT/CN2020/078430
(87) International publication number: WO 2021/000593

(56) References cited:
- WO-A1-2015/059621
- CN-A- 103 876 624
- CN-A- 105 764 388
- CN-A- 109 381 025
- CN-A- 109 381 025
- CN-A- 109 381 025
- CN-A- 110 250 914
- CN-A- 110 250 914
- CN-B- 103 876 624

## Description

### TECHNICAL FIELD

The present application relates to the technical field of beverage preparation, and in particular, relates to a beverage brewing structure, and additionally relates to a beverage machine having the beverage brewing structure.

### BACKGROUND

Coffee is one of the three major beverages in the world, and people around the world are loving coffee more and more. Coffee machines are becoming more and more popular, which make the preparation of coffee more convenient and simpler, and the "coffee culture" is embodied in every moment of life.

A capsule coffee machine is a type of coffee machine. The so-called capsule is that the manufacturer prefills coffee powder into a plastic capsule similar to a pudding box, and then fills the capsule with an inert gas to keep the coffee powder fresh. During making coffee, as long as the capsule is loaded into the above capsule coffee machine, a cup of aromatic coffee may be quickly prepared. Compared with semi-automatic coffee machines and fully automatic coffee machines using coffee powder, the operation of capsule coffee machines is very simple. Capsule coffee machines in the broad sense can not only make coffee, but also support the production of natural flower tea or the like.

A current brewing coffee machine is generally internally provided with a brewing structure. The brewing structure includes a cup seat that is capable of accommodating a capsule, an injection assembly capable of piercing the capsule film and adding water, and a clamp member (for clamping the capsule) arranged on the injection assembly, and a drive assembly configured to drive the injection assembly to move along a predetermined direction.

Since the clamp member needs to move along with the injection assembly, at present, many capsule coffee machines define the clamp member to be a long strip shape that is integrally and rigidly connected to the injection component, but this configuration may cause the clamp member to be deformed and failed after long-term abutting against a side wall of the cup seat.

CN109381025A discloses are a beverage extraction device (100) and a beverage preparation apparatus. The beverage extraction device (100) includes a first support (10), a second support (20), a fixing assembly (30) fixed between the first support (10) and the second support (20), and a piston assembly (40) installed between the first support (10) and the second support (20). The piston assembly (40) can slide relative to the fixing assembly (30). The piston assembly (40) comprises a fixing plate (41), a sealing gasket (42), a sliding member (43), a first sealing ring (44), an installation base (45), a first elastic abutting member (46) and a valve assembly (47), wherein the fixing plate (41) fixes the sealing gasket (42) on an end face of one end of the sliding member (43); the first sealing ring (44) is sheathed onto the other end of the sliding member (43); an accommodation space (4501) is provided in the installation base (45); and the valve assembly (47) is installed on the installation base (45) for opening or closing a liquid outlet (4732) of the accommodation space (4501).

### SUMMARY

The present application is intended to provide a beverage brewing structure and a beverage machine having the beverage brewing structure, to solve the technical problem that a clamping member of a current brewing structure is apt to deformation and failure.

To solve the above technical problem, the present application employs the following technical solution:

A beverage brewing structure includes:
a rack, including a base and support plates arranged on two opposing sides of the base, wherein the support plates and the base enclose a mounting space;
an injection assembly, arranged in the mount space, and being proximal to or distal from the base along a first direction; and
a clamp assembly, a pair of clamp assemblies being respectively arranged on the two support plates and movable along the first direction, the clamp assembly including a mount, a clamp member, and a connection rod; wherein the mount is in slidable cooperation with the support plates along the first direction, one end of the clamp member is rotatably connected to the mount and the other end of the clamp member is rotatably connected to the connection rod, and one end of the connection rod is rotatably connected to the clamp member and the other end of the connection rod is rotatably connected to the injection assembly;
wherein when the injection assembly moves towards a direction proximal to the base along the first direction, an end of the clamp member proximal to the injection assembly is openable towards a direction distal from the mount space.

As a further improvement of the technical solution, when the injection assembly moves towards the direction proximal to the base along the first direction to the clamp assembly and abuts against the base, the end of the clamp member proximal to the injection assembly is openable towards the direction distal from the mount space.

As a further improvement of the technical solution, a side of the base facing towards the mount space is provided with a cup seat, wherein a side wall of the cup seat is provided with a guide ramp pointing from an end of the cup seat distal from the base to an end of the base, the guide ramp being gradually distal from a center of the cup seat;
wherein when the clamp assembly abuts against the guide ramp, the end of the clamp member proximal to the injection assembly is openable towards the direction distal from the mount space.

As a further improvement of the technical solution, the mount includes a bottom plate and a slide block, and the support plate is provided with a slide groove mating with the slide block and extending along the first direction, wherein the slide block passes through the slide groove to enter the mount space; and
one of the clamp member and the slide block is further provided with a first hinge hole, and the other of the clamp member and the slide block is further provided with a rotation shaft corresponding to the first hinge hole, wherein the first rotation shaft is hinged to the first hinge hole.

As a further improvement of the technical solution, the beverage brewing structure further includes an elastic member; wherein two ends of the elastic member abut against a side of the clamp member proximal to the support plate and the mount respectively;
wherein a side of the slide block distal from the bottom plate is provided with a retaining portion, and a side of the clamp member distal from the support plate abuts against the retaining portion.

As a further improvement of the technical solution, the elastic member is a spring.

As a further improvement of the technical solution, an end of the support plate proximal to the mount space is provided with a guide plate extending along the first direction, wherein an end of the guide plate distal from the support plate is provided with a first guide portion;
wherein a distance between the first guide portion and the support plate is smaller on an end distal from the injection assembly than on an end proximal to the injection assembly; and
the first guide portion is configured to control an end of the clamp member proximal to the injection assembly to open towards the direction distal from the mount space when the clamp member moves along the first guide portion.

As a further improvement of the technical solution, the end of the guide plate distal from the support plate is further provided with a second guide portion parallel to the support plate, wherein the first guide portion is arranged between the second guide portion and the base and connected to the second guide portion; and
the clamp member abuts against the first guide portion or the second guide portion during movement.

As a further improvement of the technical solution, the mount includes a bottom plate and a slide block, and the support plate is provided with a slide groove mating with the slide block and extending along the first direction, wherein the slide block passes through the slide groove to enter the mount space; and
one of the clamp member and the slide block is further provided with a first hinge hole, and the other of the clamp member and the slide block is further provided with a rotation shaft corresponding to the first hinge hole, wherein the first rotation shaft is hinged to the first hinge hole.

As a further improvement of the technical solution, a side of the slide block distal from the bottom plate is provided with a retaining portion, and a side of the clamp member distal from the support plate abuts against the retaining portion when the clamp member abuts against the second guide portion.

As a further improvement of the technical solution, the beverage brewing structure further includes a crimp member; wherein the crimp member one-to-one corresponds to the mount, and the crimp member includes:
a crimp portion, arranged on an end of the support plate distal from the mount space, wherein the crimp portion at least partially extends along the first direction; and
a connection portion, wherein one end of the connection portion is connected to the crimp portion, and the other end of the connection portion is connected to the support plate;
wherein the crimp portion is configured to abut against an end of the bottom plate distal from the mount space when the clamp member moves along the first guide portion.

As a further improvement of the technical solution, the beverage brewing structure further includes a connection rod; wherein one end of the connection rod is hinged to the injection assembly, and the other end of the connection rod is hinged to the clamp member.

As a further improvement of the technical solution, an end of the clamp member proximal to a center of the mount space is further provided with a clamp groove configured to mount a capsule.

As a further improvement of the technical solution, the clamp member includes:
a base portion, wherein an end of the base portion proximal to the mount space is provided with the clamp groove;
a connection portion, wherein one end of the connection portion is connected to the base portion, and the other end of the connection portion extends towards the direction proximal to the base; and
a first rotation shaft, wherein the first rotation shaft is arranged on an end of the connection portion distal from the base portion, and the clamp member is rotatably connected to the mount by the first rotation shaft;
wherein along a direction in which the base portion points to the first rotation shaft, the connection portion is gradually proximal to the support plate.

As a further improvement of the technical solution, the clamp member is further provided with a deposit plate extending towards the center of the mount space, wherein the deposit plate is arranged between an end of the clamp member distal from the injection assembly and the clamp groove.

As a further improvement of the technical solution, an end of the base portion distal from the base is more proximal to the center of the mount space relative to an end of the base portion proximal to the base;
wherein the second direction is a direction in which one of the support plates points to the other of the support plates.

As a further improvement of the technical solution, the beverage brewing structure further includes a reset member, wherein one end of the reset member is connected to the injection assembly, and the other end of the reset member is connected to the support plate;
wherein the reset member is configured to drive the injection assembly to be reset when the injection assembly moves distally from the base.

As a further improvement of the technical solution, the beverage brewing structure further includes a drive assembly; wherein the drive assembly is configured to drive the clamp assembly to move along the first direction.

To solve the above technical problem, the present application further employs the following technical solution:

A beverage machine includes the above beverage brewing structure.

The present application achieves the following beneficial effects:

As compared with the beverage brewing structure available in the market, the beverage brewing structure according to the present application includes a rack, an injection assembly, and a clamp assembly. The clamp assembly includes a mount and a clamp member. One end of the clamp member is rotatably connected to the injection assembly, and the other end of the clamp member is rotatably connected to the mount.

The clamp member may be proximal to or distal from the base along the first direction under driving by the injection assembly. When the clamp member moves to and abuts against the base, the end of the clamp member proximal to the injection assembly is openable towards the direction distal from the mount space.

Since one end of the clamp member in the beverage brewing structure is rotatably connected to the mount, and the other end of the clamp member is rotatably connected to the injection assembly by a connection rod, the clamp member is entirely movable relative to the injection assembly, and may flexibly rotate when abutting against the base. This prevents deformation and failure of the structure due to long-term abutting against the base, and prolongs life time of the structure.

### BRIEF DESCRIPTION OF THE DRAWINGS

For clearer descriptions of technical solutions according to the embodiments of the present application, drawings that are to be referred for description of the embodiments are briefly described hereinafter. Apparently, the drawings described hereinafter merely illustrate some embodiments of the present application. Persons of ordinary skill in the art may also derive other drawings based on the drawings described herein without any creative effort.
FIG. 1 is a schematic perspective view of a beverage brewing structure in one direction according to one embodiment of the present application;
FIG. 2 is a schematic exploded view of an injection assembly and a clamp assembly in FIG. 1;
FIG. 3 is a schematic exploded view of a clamp assembly in FIG. 1;
FIG. 4 is a sectional view of a mount in one direction;
FIG. 5 is a schematic perspective view of a clamp member in FIG. 3 in one direction;
FIG. 6 is a schematic perspective view of the clamp member in FIG. 3 in another direction;
FIG. 7 is a schematic perspective view of a connection relationship between an injection assembly, a drive assembly, and a power assembly;
FIG. 8 is a schematic sectional view of the beverage brewing structure when the clamp assembly starts releasing a capsule;
FIG. 9 is a schematic sectional view of the beverage brewing structure when the clamp assembly successfully releases a capsule;
FIG. 10 is a schematic perspective view of a beverage brewing structure in one direction according to still another embodiment of the present application;
FIG. 11 is a schematic perspective view of a rack in FIG. 10;
FIG. 12 is a schematic perspective view of a beverage brewing structure in one direction according to another embodiment of the present application;
FIG. 13 is a schematic exploded view of the beverage brewing structure in FIG. 12 with a handle thereof hidden;
FIG. 14 is a schematic connection view of a support plate and a crimp member in FIG. 12 in one direction;
FIG. 15 is a schematic connection view of the support plate and the crimp member in FIG. 12 in another direction;
FIG. 16 is a partial exploded view of a clamp assembly, an injection assembly, and a reset member in FIG. 12;
FIG. 17 is a schematic perspective view of a clamp member in FIG. 12 in one direction;
FIG. 18 is a schematic perspective view of the clamp member in FIG. 12 in another direction; and
FIG. 19 is a partial enlarged view of part A in FIG. 18;

### DETAILED DESCRIPTION

For better understanding of the present application, the present application is described in detail with reference to attached drawings and specific embodiments. It should be noted that, when an element is defined as "being secured or fixed to" another element, the element may be directly positioned on the element or one or more centered elements may be present therebetween. When an element is defined as "being connected or coupled to" another element, the element may be directly connected or coupled to the element or one or more centered elements may be present therebetween. As used herein, the terms "vertical", "horizontal", "left", "right", "inner", "outer", and similar expressions are only for illustration purposes.

Unless the context clearly requires otherwise, throughout the specification and the claims, technical and scientific terms used herein denote the meaning as commonly understood by a person skilled in the art. Additionally, the terms used in the specification of the present application are merely for describing the objectives of the specific embodiments, and are not intended to limit the present application. As used herein, the term "and/or" in reference to a list of two or more items covers all of the following interpretations of the term: any of the items in the list, all of the items in the list and any combination of the items in the list.

In addition, technical features involved in various embodiments of the present application described hereinafter may be combined as long as these technical features are not in conflict.

In the specification, the term "mount" includes fixing or retaining an element or member or device to a specific position or place by welding, threading, snapping, bonding or the like. The element or member or device may remain stationary in the specific position or place or may be movable within a specified range; and the element or member or device, after being fixed or retained to the specific position or place, may be detachable or not detachable, which are not limited in the embodiments of the present application.

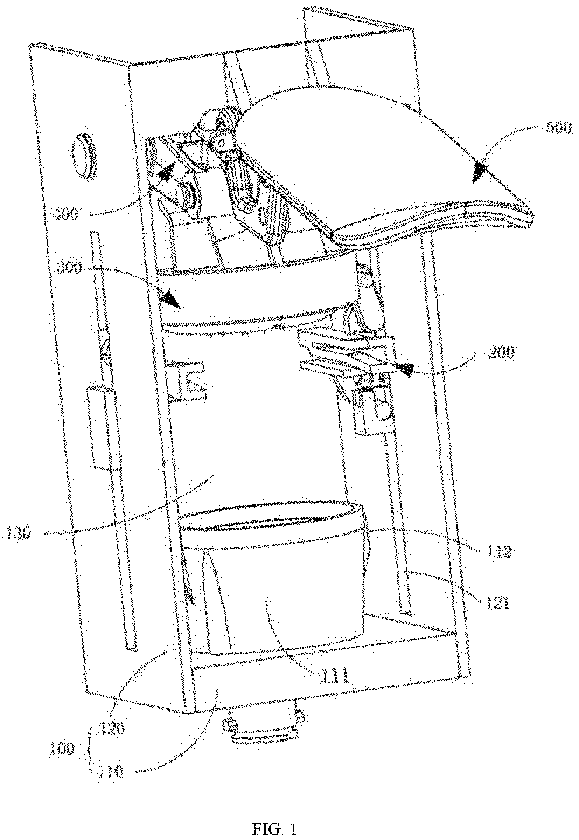

Referring to FIG. 1, a schematic perspective view of a beverage brewing structure in one direction according to an embodiment of the present application. The beverage brewing structure includes a rack 100, a clamp assembly 200, an injection assembly 300, a drive assembly 400, and a power assembly 500.

The rack 100 is configured to mount the clamp assembly 200, the injection assembly 300, the drive assembly 400, and the power assembly 500. The clamp assembly 200 is configured to mount a capsule filled with coffee powder. The injection assembly 300 is configured to pierce a top film of the capsule and fill hot water into the capsule. The drive assembly 400 is configured to drive the injection assembly 300 and the clamp assembly 200 to move along a first direction. The power assembly 500 is configured to drive the drive assembly 400 to move according to a predetermined rule.

Specifically, the rack 100 includes a base 110, and two support plates 120 arranged on two sides of the base 110 along a second direction and extending along the first direction. The base 110 and the two support plates 120 collaboratively enclose a mount space 130 configured to accommodate the clamp assembly 200, the injection assembly 300, the drive assembly 400, and the power assembly 500. A side of the base 110 facing towards the mount space 130 is provided with a cup seat 111 configured to accommodate a capsule. Specifically, the cup seat 111 is entirely in a cup shape, and an accommodation chamber whose axial line extends along the first direction is arranged at a center of the cup seat. The accommodation chamber is in communication with the mount space. The first direction is a direction in which the injection assembly 300 points to the base 110, and the second direction is a direction perpendicular to the first direction.

A side wall of the cup seat 111 is provided with a guide ramp 112. Along the first direction, and from an end distal from the base 110 to an end of the base 110, the guide ramp 112 is gradually distal from the center of the accommodation chamber, that is, gradually proximal to the support plate 120. The guide ramp 112 may be a bevel surface, a conical surface, an arc surface or the like.

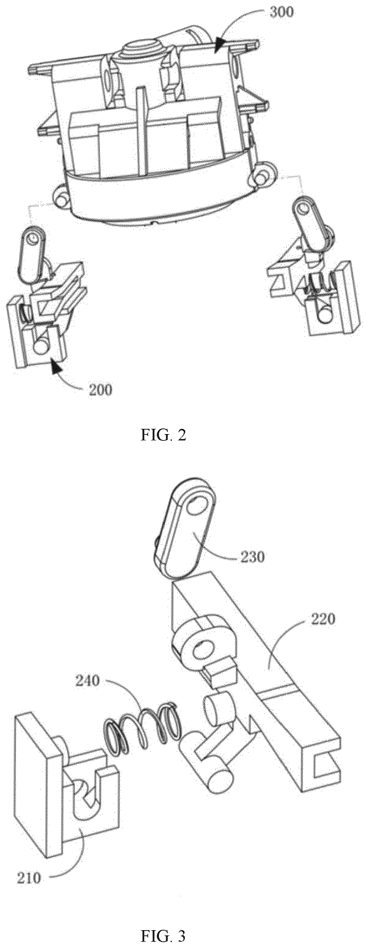

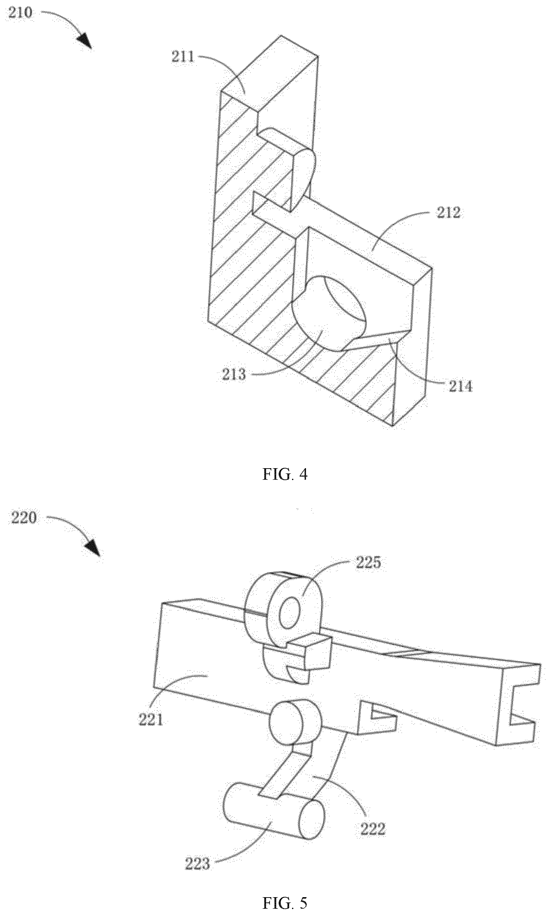

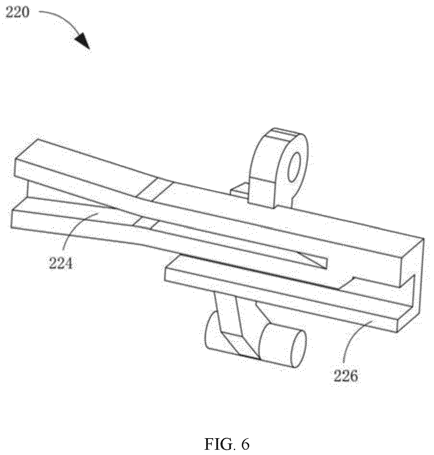

Referring to FIG. 2 to FIG. 6, a schematic exploded view of an injection assembly and a clamp assembly, a schematic exploded view of a clamp assembly, a schematic sectional view of a mount in one direction, and a schematic perspective view of a clamp member in two directions are respectively illustrated. Simultaneously referring to FIG. 1, the beverage brewing structure includes two clamp assemblies 200. These two clamp assemblies 200 are respectively arranged on the two support plates 120, and are symmetrical to each other with respect to the center of the accommodation chamber. Each clamp assembly 200 is capable of moving on the support plate 120 along the first direction. One end of the clamp assembly 200 is rotatably connected to the injection assembly 300 to establish a linkage relationship between the injection assembly 300 and the clamp assembly 200.

Specifically, the clamp assembly 200 includes a mount 210, a clamp member 220, and a connection rod 230.

The mount 210 includes a bottom plate 211 and a slide block 212 that is integrally connected to the bottom plate 211. The support plate 120 is provided with a slide groove 121 that mates with the slide block 212 and extends along the first direction. The bottom plate 211 is arranged on a side of the support plate 120 distal from the mount space 130. The slide block 212 passes through the slide groove 121 to enter the mount space 130. The clamp assembly 200 moves along the first direction under cooperation of the slide block 212 and the slide groove 121. That is, the mount 210 and the support plate 120 are in a slidable cooperation along the first direction.

The slide block 212 is provided with a first hinge hole 213 extending along a third direction. The slide block 212 is rotatably connected to the clamp member 220 by the first hinge hole 213 and a first rotation shaft of the clamp member 223 hereinafter. The third direction is a direction perpendicular to the first direction and the second direction.

The clamp member 220 includes a base portion 221, a connection portion 222, and a first rotation shaft 223. An end of the base portion 221 distal from the support plate 120 is provided with a clamp groove 224 extending along the third direction. Along the third direction, one end of the clamp groove 224 is open, and the other of the clamp groove 224 is closed. An edge of the capsule may enter the clamp grooves 224 on the two clamp assemblies 200 by the opened end, and may be relatively stably mounted on the two clamp assemblies 220 by the two clamp grooves 224.

To increase an angle range within which the clamp member 220 is capable of rotating relative to the slide block 212, and meanwhile prevent too-early interference between the clamp member 220 and the support plate 120, the base portion 221 is connected to the first rotation shaft 223 by the inclined connection portion 222. Specifically, one end the connection portion is connected to the base portion, and the other end of the connection portion extends along a direction proximal to the base. Along the first direction, from an end of the base portion 221 to an end of the first rotation shaft 223, the connection portion 222 is gradually proximal to the support plate 120, that is, in a dog bone shape with respect to the two connection portions 222.

The first rotation shaft 223 is arranged on an end of the connection portion 222 distal from the base portion 221, and entirely extends along the first direction. The first rotation shaft 223 is hinged to the first hinge hole 213, such that the clamp member 220 is rotatably connected to the mount 210. It may be understood that in other embodiments of the present application, the first hinge hole may also be arranged on the clamp member 220, and correspondingly, the mount is provided with a first rotation shaft corresponding thereto.

To prevent the clamp member 220 from freely rotating during movement along the first direction such that it is difficult for the clamp member 220 to release the capsule according to a predetermined configuration, an elastic member 240 is further arranged between the bottom plate 211 and the base portion 221, and meanwhile an end of the slide block 212 distal from the bottom plate 211 is further provided a retaining portion 214. Before the capsule is released, under the effect of the elastic member 240, a side of the connection portion 222 distal from the bottom plate 211 abuts against the retaining portion 214, to ensure that the clamp member 220 remains stably without any rotation during movement along the first direction.

In this embodiment, the retaining portion 214 is an inclined surface mating with a side surface of an end of the connection portion 222 distal from the bottom plate. It may be understood that in other embodiments, the retaining portion may be in another shape. For example, when the end of the connection portion 222 distal from the bottom plate is an arc surface, the retaining portion may be correspondingly adjusted to an arc surface, which is not limited herein.

In this embodiment, the elastic member 240 is a spring, and a cylindrical protrusion is arranged on each of the bottom plate 211 and the base portion 221, which extends towards the bottom plate 211 or the base portion 221. The spring is sleeved onto the two cylindrical protrusions, and two ends of the spring respectively abut against the bottom plate 211 and the base portion 221.

It should be understood that the elastic member 240 may also be an elastic member made of a silica gel, a rubber, a highly elastic sponge, or the like. The specific position of the elastic member may also be simply adjusted. For example, the two ends of the elastic member 240 respectively abut against the slide block 212 and the connection portion 222, which is not limited herein.

To cause the clamp assembly 200, during retraction (that is, in the process of moving distally from the base), to pull out the capsule from the accommodation chamber for recycling, a side of the base portion 221 proximal to the accommodation chamber is provided with a deposit plate 226 extending towards a center of the accommodation chamber. The deposit plate 226 is specifically arranged between the clamp groove 224 and the connection portion 222. The deposit plate 226 according to this embodiment is a flat plate-shaped structure. It may be understood that in other embodiments of the present application, the deposit plate 226 may also be a bar-shaped, a strip-shaped, or the like structure, as long as the deposit plate abuts against the edge of the capsule and pulls out the capsule from the accommodation chamber during retraction.

Two ends of the connection rod 230 are respectively rotatably connected to the clamp member 220 and the injection assembly 300. Specifically, an end of the base portion 221 proximal to the injection assembly 300 is provided with a hinge seat 225, wherein the hinge seat 225 is provided with a second hinge hole penetrating through the hinge seat 225 along the third direction, an end of the connection rod 230 proximal to the clamp member 220 is provided with a second rotation shaft mating with the second hinge hole, and the connection rod 230 is rotatably connected to the clamp member 220 by the second hinge hole and the second rotation shaft. Similarly, an end of the connection rod 230 proximal to the injection assembly 300 is provided with a third rotation shaft, the injection assembly 300 is provided with a third hinge hole mating with the third rotation shaft, and the connection rod 230 is rotatably connected to the injection assembly 300 by the third hinge hole and the third rotation shaft.

Further, to prevent interference of the connection rod 230 and the hinge seat 225 during movement and with the support plate 120, a sum of widths of the connection rod 230 and the hinge seat 225 is less than a width of the slide groove 121, and projections of the connection rod 230 and the hinge seat 225 on the support plate 120 fall within a width range of the slide groove 121.

In the above embodiment, the clamp member 220 is rotatably connected to the injection assembly 300 by the connection rod 230.

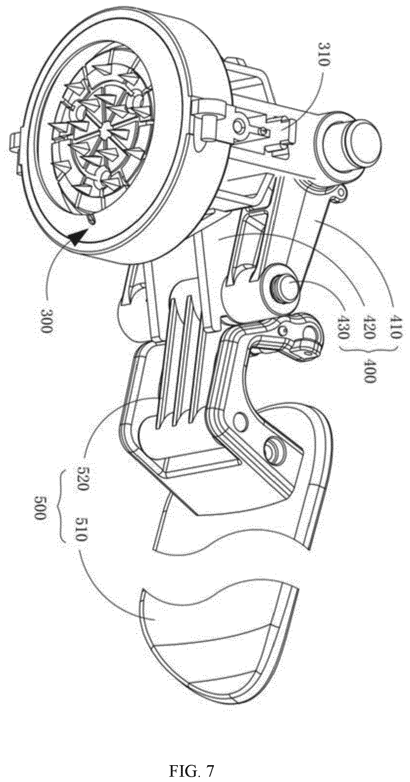

Referring to FIG. 7, a schematic perspective view of a connection relationship between the injection assembly, the drive assembly, and the power assembly is illustrated. Still referring to FIG. 1 to FIG. 6, the injection assembly 300 is provided with a guide block 310 mating with the slide groove 121, such that the injection assembly is capable of sliding along the first direction under the cooperation of the slide block 310 and the slide groove 121.

The drive assembly 400 includes a first connection rod 410, a second connection rod 420, and a connection shaft 430. One end of the first connection rod 410 is hinged between the two support plates 120, and is rotatable about an axial line parallel to the second direction, and the other end of the first connection rod 410 is hinged to two second connection rods 420 by the connection shaft 430. An end of the second connection shaft 420 distal from the rotation shaft is rotatably connected to the injection assembly 300. In general, the support plate 120, the first connection rod 410, the second connection rod 420, and the injection assembly 300 constitute a crank slide block mechanism, which drives the first connection rod 410 to rotate towards an end proximal to the base 110 such that the injection assembly moves towards an end proximal to the base 110, and on the contrary, drives the first connection rod 410 to rotate towards an end distal from the base 110 such that the injection assembly 300 moves towards an end distal from the base 110.

The power assembly 500 includes a handle 510 and a third connection rod 520. An end of the handle 510 is hinged to the rack 100, and is rotatable about an axial line parallel to the second direction. One end of the third connection rod is hinged to the connection shaft 430, and the other end of the third connection rod is hinged to a middle portion of the handle 510.

Using a hinge shaft between the handle 510 and the rack 100 as an axial center, when the handle 510 is made to rotate towards a direction proximal to the mount space, the third connection rod 520 pulls the connection shaft 430 to move towards a side proximal to the base 110, such that the injection assembly 300 is driven to move towards the base 110.

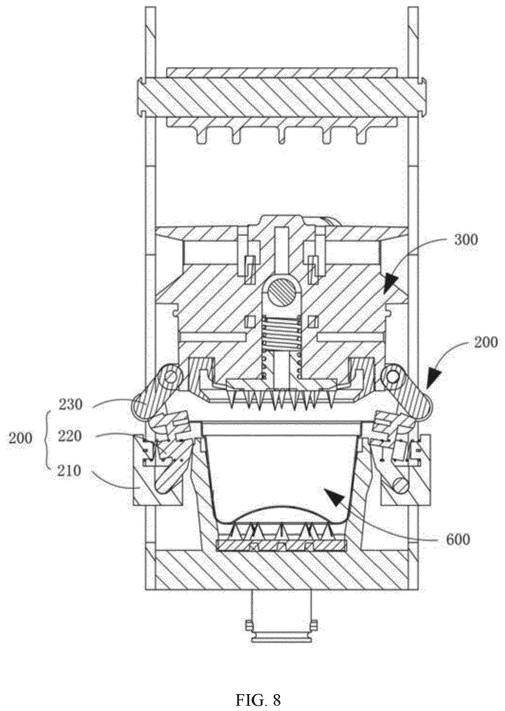

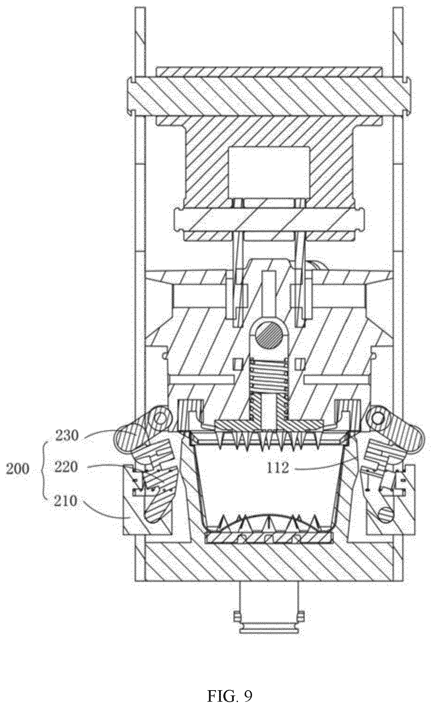

Referring to FIG. 8 and FIG. 9, schematic sectional views of the beverage brewing structure when the clamp assembly starts releasing a capsule and when the clamp assembly successfully releases a capsule are illustrated. Still referring to FIG. 1 to FIG. 7, the operating process of the beverage brewing structure is described briefly.

Before brewing beverage, the handle 510 is pulled towards a direction distal from the mount space 130 to a state as illustrated in FIG. 1.

Then, the edge of a capsule 600 is mounted on the clamp assembly 200 from an open end of the clamp groove 224.

Afterwards, the handle 510 is pushed towards the direction proximal to the mount space 130 to drive the injection assembly 300, the clamp assembly 200, and the capsule 600 mounted on the clamp assembly 200 to move proximally to the cup seat 111 along the first direction.

Referring to FIG. 8, when the capsule 600 partially enters the accommodation chamber, and the clamp member 220 abuts against the guide ramp 112, an end of the clamp member 220 proximal to the injection assembly 300 may overcome an elastic force of the elastic member 240 under the abutting effect, and rotate, relative to the mount 210, towards the direction distal from the center of the mount space 130. When the clamp member 220 rotates to a specific position, the edge of the capsule 600 is absolutely released from the clamp groove 224, and the capsule 600 totally enters the accommodation chamber under a pushing force of the injection assembly 300, as illustrated in FIG. 9. In the meantime, the clamp assembly 200 continues moving towards the direction proximal to the base 110.

Subsequently, the injection assembly 300 pierces a top film of the capsule 600, and fills hot water into the capsule 600 to complete the brewing process.

Upon completion of brewing, the handle 510 is pulled towards the direction distal from the mount space 130, and the clamp assembly 200 moves towards a direction distal from the base 110 under the pushing effect of the injection assembly 300, until the clamp assembly returns to its initial position. During this process, the deposit plate 226 is capable of pulling the capsule 600 out of the accommodation chamber, such that the capsule 600 falls at a specified recycle position. After the clamp assembly 200 leaves away from the cup seat 111, the clamp member 220 is reset under the effect of the elastic member 240.

The clamp assembly 200 of the beverage brewing structure includes a mount 210 and a clamp member 220. One end of the clamp member 220 is rotatably connected to the injection assembly 300, and the other end of the clamp member 220 is rotatably connected to the mount 210.

When the clamp assembly 200 moves to abut against the base 110, an end of each of the two clamp members 220 proximal to the injection assembly 300 is opened towards the direction distal from the mount space 130.

Since one end of the clamp member 220 in the beverage brewing structure is rotatably connected to the mount 210, and the other end of the clamp member 220 is rotatably connected to the injection assembly 300 by a connection rod 230, the clamp member 220 is entirely movable relative to the injection assembly 300, and may flexibly rotate when abutting against the base 110. This prevents deformation and failure of the structure due to long-term abutting against the base, and prolongs life time of the structure.

It should be noted that in the above embodiment, the two clamp members are opened and closed by cooperation between the clamp members 220 and the guide ramp 112. However, opening and closing of the clamp members are not limited in the embodiment of the present application, and may be implemented as long as a structure capable of abutting against the clamp members 200 during movement thereof is arranged on the rack 100. For example, the clamp assembly 200 may be opened and closed not by the above guide ramp 112. Instead, after the clamp member 200 moves to the mount 210 and abuts against the base 110, the mount 210 may be secured with respect to the rack 100. Since the injection assembly 300 may be still proximal to the accommodate chamber, the clamp member 220 may overcome the elastic force of the elastic member 240 under the effect of the connection rod 230, and rotate about the first rotation shaft 223 towards the direction distal from the center of the mount space 130.

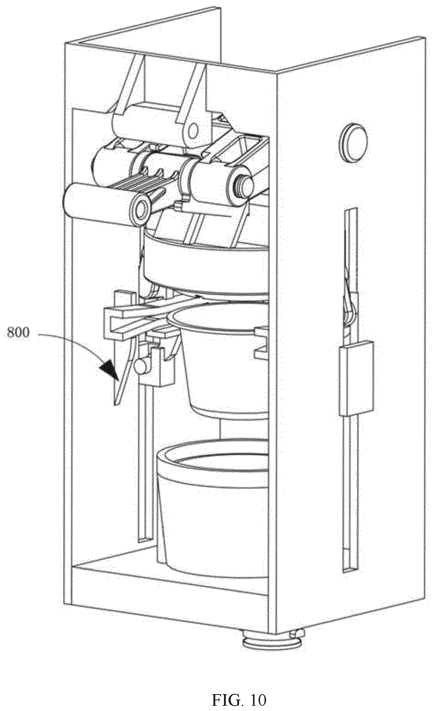

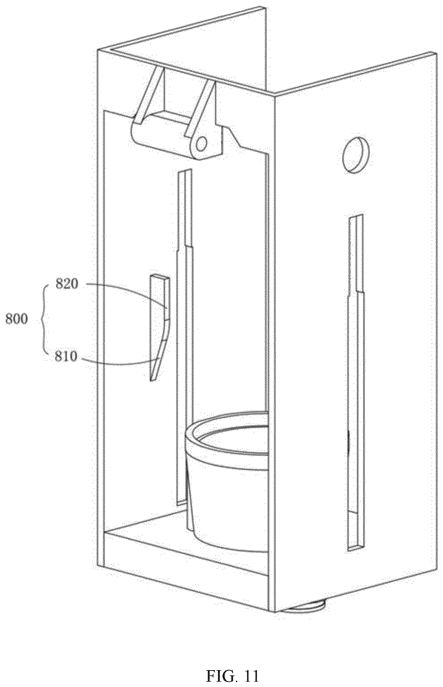

In addition, referring to FIG. 10 and FIG. 11, a schematic perspective view of another beverage brewing structure in one direction and a schematic perspective view of a rack in one direction are illustrated. Still referring to FIG. 1 to FIG. 9, the beverage brewing structure is different from the above embodiment mainly as follows:

In the above embodiment, the elastic member 240 is arranged between the mount 210 and the clamp member 220, such that the clamp member 220 remains relatively stable before reaching the position of releasing the capsule, whereas after the mount 210 abuts against the rack 100, the clamp member 220 overcomes the elastic force and rotates towards the direction distal from the mount space.

However, in this embodiment, a guide plate 800 extending along the first direction is arranged on each of the two support plates on the two sides of the cup seat, such that the clamp member is opened at a predetermined configuration to release the capsule, and the two guide plates 800 are symmetrically arranged with respect to the cup seat.

Specifically, a side of the guide plate 900 distal from the support plate is provided with a first guide portion 810 and a second guide portion 820, wherein the first guide portion 810 is arranged between the second guide portion 820 and the base. The first guide portion 810 is obliquely arranged with respect to the support plate, and points from a top portion of the cup seat to a bottom portion of the cup seat along the first direction, such that a distance the first guide portion 810 and the support plate gradually becomes smaller.

The second guide portion 820 is parallel to the support plate. That is, a distance between the second guide portion 820 and the support plate remains consistent. Preferably, a transition is defined, by an arc surface, between the second guide portion 820 and the first guide portion 810.

In this embodiment, the first guide portion 810 and the second guide portion 820 are both a planar shape. It may be understood that in other embodiments of the present application, the first guide portion 810 and the second guide portion 820 may also be both a straight-line shape, for example, a generatrix of a cylinder. In addition, the second guide portion 820 may also be an arc surface or an arc line. Each support plate may be provided with two or more than two guide plates 800, which is not limited herein any further.

Hereinafter, with reference to the accompanying drawings, the operating process of the beverage brewing structure according to this embodiment is briefly described.

At an initial position, an end of the base portion of the clamp member abuts against the second guide portion 820, and a side of the connection portion abuts against the retaining portion, that is, the clamp member is secured with respect to the mount and may thus not rotate. When the injection assembly is driven along the first direction to approach the cup seat, the base portion moves from the second guide portion 820 to the first guide portion 810. During this process, the distance between the base portion and the support plate gradually becomes smaller. Since the first rotation shaft does not change with respect to the distance to the support plate, an end of the clamp member proximal to the injection assembly may be relatively deflected towards the direction distal from the mount space, such that the clamp member is opened to release the capsule. In this whole course, the clamp member abuts against the guide plate 800.

The guide plate 800 may be integrally formed with the support plate, and as compared with forming a protrusion configured to mount the elastic member on the mount, integral formation of the support plate and the support plate is simpler. In addition, the elastic member is omitted, such that the cost of the parts and the cost of the assembling may be lowered.

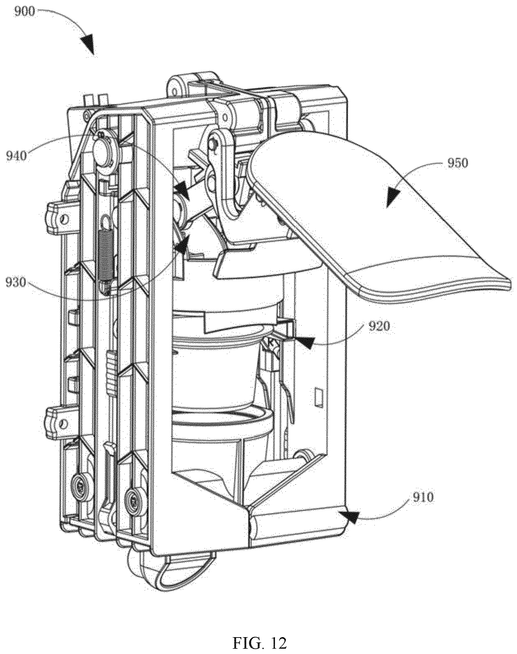

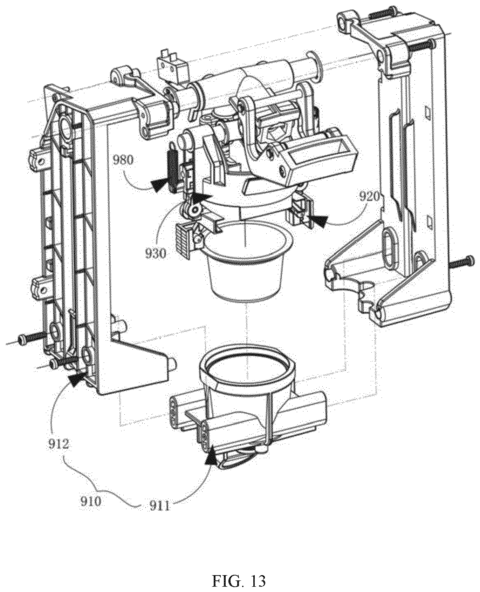

Referring to FIG. 12 and FIG. 13, a schematic perspective view and a schematic exploded view of another beverage brewing structure 900 according to an embodiment of the present application are illustrated. The beverage brewing structure 900 includes a rack 910, a clamp assembly 920, an injection assembly 930, a drive assembly 940, and a power assembly 950. Still referring to FIG. 1 to FIG. 11, the beverage brewing structure 900 is different from the beverage brewing structure according to the above embodiment mainly as follows:

The beverage brewing structure 900 further includes a crimp member and a reset member 980, wherein the crimp member is arranged an end of the support plate distal from the mount space and is arranged on a side proximal to the base, and two ends of the reset member 980 are respectively connected to the injection assembly and the support plate. In addition, the clamp assembly 920 does not include a separate deposit plate.

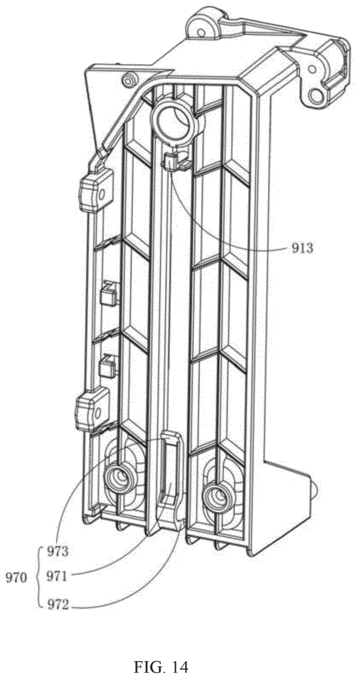

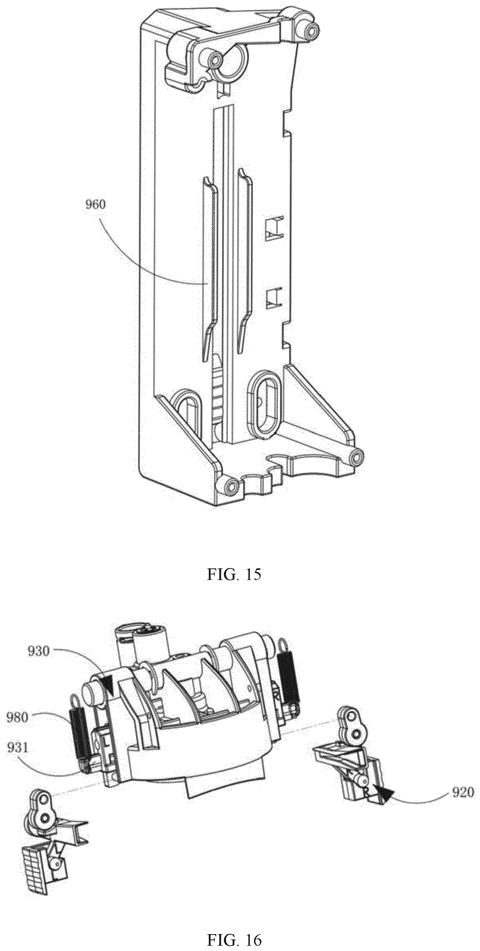

Specifically, the rack 910 includes a base 911, and two support plates 912 that are respectively arranged on two sides of the base 011 along the second direction and extend along the first direction. A securing portion is extended and formed at an end of each support plate 912 proximal to the base 011, and each support plate 912 is securely fixed to the base 911 by the securing portion. Referring to FIG. 14 and FIG. 15, schematic connection views of a support plate 912 and a crimp member 970 in two directions are illustrated. An end of the support plate proximal to the mount space is provided with two guiding plates 960, wherein the two support plates 960 are parallelly arranged along the third direction. The guide plate 960 is substantially the same as the guide plate 800 in the above embodiment in terms of shape, structure and effect, which is not described herein any further. An end of the support plate distal from the mount space is provided with the crimp member 970, wherein the crimp member one-to-one corresponds to the support plate 912 and the mount, the crimp member 970 specifically includes a crimp portion 971 and a connection portion 972. The crimp portion 971 is arranged at the end of the support plate distal from the mount space, and at least partially extends along the first direction. The connection portion 972 is arranged at an end of the crimp portion 971 proximal to the base, wherein one end of the connection portion 972 is connected to the crimp portion 971, and the other end of the connection portion 972 is connected to the support plate 971. The crimp portion 971 is configured to abut against an end of a base plate of the mount distal from the mount space when the base portion of the clamp member moves along a first guide portion of the guide plate 960, such that a pressure is produced between the mount and the support plate 912 and the crimp member 970 respectively. In this case, the mount is subject to friction during movement, such that a moving velocity of the mount is less than a moving velocity of the injection assembly. In this way, when the injection assembly approaches the base, the clamp member stably rotates towards the direction distal from the mount space and release the capsule, and when the injection assembly goes distally from the base, the clamp member stably approaches towards the direction proximal to the mount space and is centered and reset. Further, the crimp member 970 further includes a guide portion 973, wherein one end of the guide portion 973 is connected to an end of the crimp portion 971 distal from the connection portion 972, and the other end of the crimp portion 973 obliquely extends towards the direction distal from the mount space relative to the support plate 912. A distance between an end of the guide portion 973 distal from the crimp portion 971 and the support plate 912 is greater than a distance between the crimp portion 971 and the support plate 912. Therefore, arrangement of the guide portion may increase tolerance when the base plate of the mount enters between the crimp portion 971 and the support plate 912. In this embodiment, the crimp member 970 is made of a plastic, and is integrally formed with the support plate 912. It may be understood that in other embodiments of the present application, the crimp member may also be made of a rubber, a silica gel, a metal sheet, or the like material, which is not described herein any further. In addition, in other embodiments of the present application, the crimp portion may also be arranged one side or two sides of the crimp portion along the third direction, and may be connected to the crimp portion and the support plate respectively.

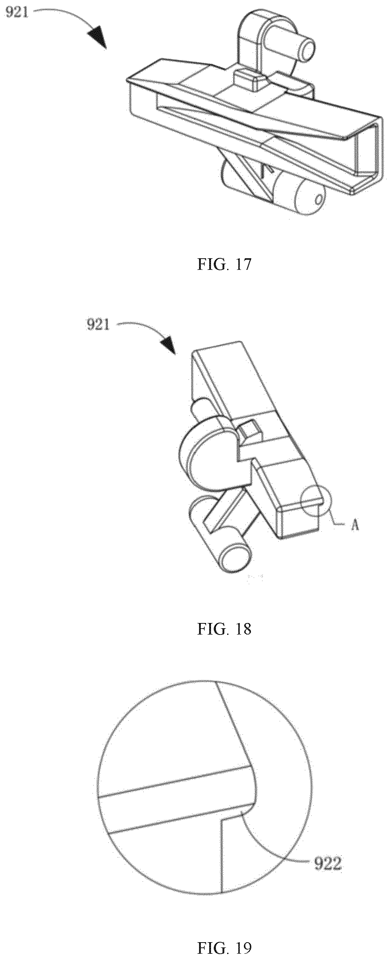

With respect to the clamp assembly 920, referring to FIG. 16 to FIG. 19, a schematic partial exploded view of the clamp assembly 920, the injection assembly 930, and the reset member 980, a schematic perspective view of the clamp member in two directions, and a schematic partially enlarged view of position A are illustrated. Still referring to FIG. 1 to FIG. 15, the clamp assembly 930 is different from the clamp assembly in the above embodiment in terms of structure mainly as follows: The clamp assembly in the above embodiment includes a deposit plate that is separately arranged between the base portion and the connection portion, and a brewed capsule is pulled out and recycled from the accommodation chamber by the deposit plate. However, in this embodiment, the clamp assembly 930 does not include a separate deposit plate, but the base portion extends on a side of the clamp groove distal from the base 911 along the second direction towards a side proximal to the center of the mount space to form a deposit portion, such that a brewed capsule is pulled out and recycled from the accommodation chamber. That is, among two ends of the base portion along the first direction, an end of the base portion distal from the base is more proximal to the center of the mount space along the second direction relative to an end thereof proximal to the base. In addition, arrangement of the guide ramp on the cup seat may prevent interference between the deposit portion and the cup seat during reciprocation process.

With respect to the injection assembly 930, the drive assembly 940, and the power assembly 950, the structures thereof are respectively the same as those of the injection assembly, the drive assembly, and the power assembly, which are not described herein any further.

With respect to the reset member 980, referring to FIG. 13 to FIG. 16, one end of the reset member 980 is connected to the injection assembly 930, and the other end of the reset member 980 is connected to the support plate 912. Specifically, the injection assembly 930 is provided with a first connection portion 931, an end of the support plate 912 distal from the mount space relative to a side distal from the base is provided with a second connection portion 913, and two ends of the reset member 980 are respectively connected to the first connection portion 931 and the second connection portion 913. In this embodiment, the reset member 980 is a spring. The two springs are respectively arranged on two sides of the injection assembly 930 along the second direction, and one-to-one correspond to the support plates 912. When the injection assembly moves proximally to the base, the injection assembly 930 overcomes the elastic force of the spring and stretches the spring, such that the spring drives the injection assembly to be reset during movement of the injection assembly distal from the base. In this way, the clamp assembly 920 is driven to reset. It may be understood that in other embodiments of the present application, the reset member may also be a rubber strip, a silica gel strip, or the like elastic member. The number of elastic members may be other numbers other than two.

The operating process of the beverage brewing structure are substantially the same as the operating process of the beverage brewing structure in the above embodiment. As a compared with the beverage brewing structure in the above embodiment, the beverage brewing structure 900 according to this embodiment has the following advantages:

In the above embodiment, when the base portion of the clamp assembly moves to the region of the first guide portion, since the injection assembly and the mount both move freely along the first direction and a moving velocity difference therebetween is randomly variable, it is hard to determine the rule by which the clamp member rotates towards a side distal from the mount space. However, in this embodiment, when the base portion of the clamp assembly moves to the region of the first guide portion, since the bottom plate of the mount has entered between the crimp member and the support plate, and a friction force between the bottom plate of the mount, and the crimp member and the support plate is relatively stable, on the condition that the moving velocity difference between the injection assembly 930 and the mount is also relatively stable, the clamp member may stably rotate towards the direction distal from the mount space and release the capsule when the injection assembly approaches the base, and in addition, may stably rotate towards the direction proximal to the mount space and be centered and reset.

In addition, with respect to the beverage brewing structure in the above embodiment, regardless of whether the injection assembly is proximal to or distal from the base, the handle needs to be rotated manually. Therefore, this beverage brewing structure is labor consuming during use, and thus user experience is poor. However, in this embodiment, the beverage brewing structure 900 further includes the reset member 980. With the reset member 980, upon completion of beverage brewing, a user only needs to pull the handle with a small force to cause the drive assembly to be detached from the dead point position. In this way, the injection assembly may be reset under the effect of the reset member 980, and meanwhile drive the clamp assembly 920 to be reset. Therefore, the use of this beverage brewing structure is labor-saving, and good user experience is achieved.

The present application further provides a beverage machine. The beverage machine includes a machine body and the beverage brewing structure as described above. Since the two ends of the clamp member in the beverage brewing structure are respectively connected to the injection assembly and the mount, the clamp member is entirely movable relative to the injection assembly, and may flexibly rotate when abutting against the base. This prevents deformation and failure of the structure due to long-term passive abutting against the base, and prolongs life time of the structure.

## Claims

1. A beverage brewing structure, comprising:
a rack (100), comprising a base (110) and support plates (120) arranged on two opposing sides of the base (110), the support plates (120) and the base (110) enclosing a mount space (130);
an injection assembly (300), arranged in the mount space (130), and being proximal to or distal from the base (110) along a first direction; and
a clamp assembly (200), a pair of clamp assemblies (200) being respectively arranged on the two support plates (120) and movable along the first direction, the clamp assembly (200) comprising a mount (210), a clamp member (220), and a connection rod (230); wherein the mount is in slidable cooperation with the support plates along the first direction, one end of the clamp member (220) is rotatably connected to the mount (210) and the other end of the clamp member (220) is rotatably connected to the connection rod (230), and one end of the connection rod (230) is rotatably connected to the clamp member (220) and the other end of the connection rod (230) is rotatably connected to the injection assembly (300);
wherein when the injection assembly (300) moves towards a direction proximal to the base (110) along the first direction, an end of the clamp member (220) proximal to the injection assembly (300) is openable towards a direction distal from the mount space (130);
**characterized in that** when the injection assembly (300) moves towards the direction proximal to the base (110) along the first direction to the clamp assembly (200) and abuts against the base (110), the end of the clamp member (220) proximal to the injection assembly (300) is openable towards the direction distal from the mount space (130).

2. The beverage brewing structure according to claim 1, wherein a side of the base (110) facing towards the mount space (130) is provided with a cup seat (111), a side wall of the cup seat (111) being provided with a guide ramp (112) pointing from an end of the cup seat (111) distal from the base (110) to an end of the base (110), the guide ramp (112) being gradually distal from a center of the cup seat (111);
wherein when the clamp assembly (220) abuts against the guide ramp (112), the end of the clamp member (220) proximal to the injection assembly (300) is openable towards the direction distal from the mount space (130).

3. The beverage brewing structure according to claim 1, wherein the mount (210) comprises a bottom plate (211) and a slide block (212), and the support plate (120) is provided with a slide groove (121) mating with the slide block (212) and extending along the first direction, the slide block (212) passing through the slide groove (121) to enter the mount space (130); and
one of the clamp member (220) and the slide block (212) is further provided with a first hinge hole, and the other of the clamp member (220) and the slide block (212) is further provide with a rotation shaft corresponding to the first hinge hole, the first rotation shaft being hinged to the first hinge hole.

4. The beverage brewing structure according to claim 1, further comprising an elastic member (240); wherein two ends of the elastic member (240) abut against a side of the clamp member (220) proximal to the support plate (120) and the mount (210) respectively;
wherein a side of the slide block (121) distal from the bottom plate (211) is provided with a retaining portion (214), and a side of the clamp member (220) distal from the support plate (120) abuts against the retaining portion (214).

5. The beverage brewing structure according to claim 4, wherein the elastic member (240) is a spring.

6. The beverage brewing structure according to claim 4, wherein an end of the support plate proximal to the mount space (130) is provided with a guide plate (800) extending along the first direction, an end of the guide plate (800) distal from the support plate (120) being provided with a first guide portion (810);
wherein a distance between the first guide portion (810) and the support plate (120) is smaller on an end distal from the injection assembly (300) than on an end proximal to the injection assembly (300); and
the first guide portion (810) is configured to control an end of the clamp member (220) proximal to the injection assembly (300) to open towards the direction distal from the mount space (130) when the clamp member (220) moves along the first guide portion (810).

7. The beverage brewing structure according to claim 6, wherein the end of the guide plate (800) distal from the support plate (120) is further provided with a second guide portion (820) parallel to the support plate (120), the first guide portion being arranged between the second guide portion (820) and the base (110) and connected to the second guide portion (820); and
the clamp member (220) abuts against the first guide portion (810) or the second guide portion (820) during movement.

8. The beverage brewing structure according to claim 1, wherein the mount (210) comprises a bottom plate (211) and a slide block (212), and the support plate (120) is provided with a slide groove (121) mating with the slide block (212) and extending along the first direction, the slide block (212) passing through the slide groove (121) to enter the mount space (130); and
one of the clamp member (220) and the slide block (212) is further provided with a first hinge hole, and the other of the clamp member (220) and the slide block (212) is further provided with a rotation shaft corresponding to the first hinge hole, the first rotation shaft being hinged to the first hinge hole.

9. The beverage brewing structure according to claim 8, wherein a side of the slide block (121) distal from the bottom plate (211) is provided with a retaining portion (214), and a side of the clamp member (220) distal from the support plate (120) abuts against the retaining portion (214) when the clamp member abuts against the second guide portion (820).

10. The beverage brewing structure according to claim 8, further comprising a crimp member (970); wherein the crimp member (970) one-to-one corresponds to the mount (210), and the crimp member (970) comprises:
a crimp portion (971), arranged on an end of the support plate (120) distal from the mount space (130), the crimp portion (971) at least partially extending along the first direction; and
a connection portion (972), one end of the connection portion (972) being connected to the crimp portion (971), and the other end of the connection portion (972) being connected to the support plate (120);
wherein the crimp portion (971) is configured to abut against an end of the bottom plate (211) distal from the mount space (130) when the clamp member (220) moves along the first guide portion (810).

11. The beverage brewing structure according to any one of claims 1 to 10, further comprising a connection rod (230); wherein one end of the connection rod (230) is hinged to the injection assembly (300), and the other end of the connection rod (230) is hinged to the clamp member (220).

12. The beverage brewing structure according to any one of claims 1 to 10, wherein an end of the clamp member (220) proximal to a center of the mount space (130) is further provided with a clamp groove (224) configured to mount a capsule.

13. The beverage brewing structure according to claim 12, wherein the clamp member (220) comprises:
a base portion (221), an end of the base portion (221) proximal to the mount space (130) being provided with the clamp groove (224);
a connection portion (222), one end of the connection portion (222) being connected to the base portion (221), and the other end of the connection portion (222) extending towards the direction proximal to the base (110); and
a first rotation shaft (223), the first rotation shaft (223) being arranged on an end of the connection portion (222) distal from the base portion (221), the clamp member (220) being rotatably connected to the mount (210) by the first rotation shaft (223);
wherein along a direction in which the base portion (221) points to the first rotation shaft (223), the connection portion (222) is gradually proximal to the support plate (120).

14. A beverage machine, comprising the beverage brewing structure as defined in any one of claims 1 to 13.

## Patentansprüche

1. Getränkebrühstruktur, umfassend:
ein Gestell (100), umfassend einen Fuß (110) und Trägerplatten (120), die auf zwei gegenüberliegenden Seiten des Fußes (110) angeordnet sind, wobei die Trägerplatten (120) und der Fuß (110) einen Halterungsraum (130) umschließen;
eine Einspritzbaugruppe (300), die in dem Halterungsraum (130) angeordnet ist und sich in einer ersten Richtung zu dem Fuß (110) hin und von diesem weg bewegen kann; und
eine Klemmbaugruppe (200), wobei je eine Klemmbaugruppe (200) an je einer der beiden Trägerplatten (120) angeordnet ist und sich in der ersten Richtung bewegen kann, wobei die Klemmbaugruppe (200) eine Halterung (210), ein Klemmelement (220) und eine Verbindungsstange (230) umfasst; wobei die Halterung mit den Trägerplatten entlang der ersten Richtung gleitend zusammenwirkt, wobei ein Ende des Klemmelements (220) drehbar mit der Halterung (210) verbunden ist und das andere Ende des Klemmelements (220) drehbar mit der Verbindungsstange (230) verbunden ist, und ein Ende der Verbindungsstange (230) drehbar mit dem Klemmelement (220) verbunden ist und das andere Ende der Verbindungsstange (230) drehbar mit der Einspritzbaugruppe (300) verbunden ist;
wobei bei einer Bewegung der Einspritzbaugruppe (300) zum Fuß (110) hin entlang der ersten Richtung ein Ende des Klemmelements (220) entfernt von der Einspritzbaugruppe (300) in einer Richtung weg von dem Halterungsraum (130) geöffnet werden kann;
**dadurch gekennzeichnet, dass** bei der Bewegung der Einspritzbaugruppe (300) zum Fuß (110) hin entlang der ersten Richtung zur Klemmbaugruppe (200) bei ihrer Anlage am Fuß (110) das Ende des Klemmelements (220) nahe der Einspritzbaugruppe (300) in der Richtung weg von dem Halterungsraum (130) geöffnet werden kann.

2. Getränkebrühstruktur nach Anspruch 1, wobei eine Seite des Fußes (110), die dem Halterungsraum (130) zugewandt ist, mit einem Tassensitz (111) versehen ist, wobei eine Seitenwand des Tassensitzes (111) mit einer Führungsrampe (112) versehen ist, die von einem Ende des Tassensitzes (111) entfernt von dem Fuß (110) zu einem Ende des Fußes (110) weist, wobei die Führungsrampe (112) sich allmählich von der Mitte des Tassensitzes (111) entfernt;
wobei, wenn die Klemmbaugruppe (220) an der Führungsrampe (112) anliegt, das Ende der Klemmelement (220) nahe der Einspritzbaugruppe (300) in die Richtung weg vom Halterungsraum (130) betätigbar ist.

3. Getränkebrühstruktur nach Anspruch 1, wobei die Halterung (210) eine Bodenplatte (211) und einen Gleitblock (212) umfasst und die Trägerplatte (120) mit einer Gleitnut (121) versehen ist, die mit dem Gleitblock (212) zusammengefügt ist und sich in der ersten Richtung erstreckt, wobei der Gleitblock (212) durch die Gleitnut (121) verläuft und in den Halterungsraum (130) eintritt; und
eins von dem Klemmelement (220) und dem Gleitblock (212) ferner mit einem ersten Drehanbringungsloch versehen ist und das andere von dem Klemmelement (220) und dem Gleitblock (212) ferner mit einer Drehachse versehen ist, die dem ersten Drehanbringungsloch entspricht, wobei die erste Drehachse drehbar im ersten Drehanbringungsloch angebracht ist.

4. Getränkebrühstruktur nach Anspruch 1, ferner umfassend ein elastisches Element (240); wobei je eines von zwei Enden des elastischen Elements (240) jeweils an einer Seite des Klemmelements (220) nahe der Trägerplatte (120) und der Halterung (210) anliegt;
wobei eine Seite des Gleitblocks (121) entfernt von der Bodenplatte (211) mit einem Rückhalteabschnitt (214) versehen ist und eine Seite des Klemmelement (220) entfernt von der Trägerplatte (120) an dem Rückhalteabschnitt (214) anliegt.

5. Getränkebrühstruktur nach Anspruch 4, wobei das elastische Element (240) eine Feder ist.

6. Getränkebrühstruktur nach Anspruch 4, wobei ein Ende der Trägerplatte nahe dem Halterungsraum (130) mit einer Führungsplatte (800) versehen ist, die sich in der ersten Richtung erstreckt, wobei ein Ende der Führungsplatte (800) entfernt von der Trägerplatte (120) mit einem ersten Führungsabschnitt (810) versehen ist;
wobei ein Abstand zwischen dem ersten Führungsabschnitt (810) und der Trägerplatte (120) an einem Ende entfernt von der Einspritzbaugruppe (300) kleiner als an einem Ende nahe der Einspritzbaugruppe (300); und
der erste Führungsabschnitt (810) dazu konfiguriert ist, ein Ende des Klemmelements (220) nahe der Einspritzbaugruppe (300) so zu steuern, dass es sich in die Richtung entfernt vom Halterungsraum (130) öffnet, wenn sich das Klemmelement (220) am ersten Führungsabschnitt (810) entlang bewegt.

7. Getränkebrühstruktur nach Anspruch 6, wobei das Ende der Führungsplatte (800), das von der Trägerplatte (120) entfernt ist, ferner mit einem zweiten Führungsabschnitt (820) parallel zur Trägerplatte (120) versehen ist, wobei der erste Führungsabschnitt zwischen dem zweiten Führungsabschnitt (820) und dem Fuß (110) angeordnet ist und mit dem zweiten Führungsabschnitt (820) verbunden ist; und
das Klemmelement (220) bei seiner Bewegung am ersten Führungsabschnitt (810) oder am zweiten Führungsabschnitt (820) anliegt.

8. Getränkebrühstruktur nach Anspruch 1, wobei die Halterung (210) eine Bodenplatte (211) und einen Gleitblock (212) umfasst und die Trägerplatte (120) mit einer Gleitnut (121) versehen ist, die mit dem Gleitblock (212) zusammengefügt ist und sich in der ersten Richtung erstreckt, wobei der Gleitblock (212) durch die Gleitnut (121) verläuft und in den Halterungsraum (130) eintritt; und
eins von dem Klemmelement (220) und dem Gleitblock (212) ferner mit einem ersten Drehanbringungsloch versehen ist und das andere von dem Klemmelement (220) und dem Gleitblock (212) ferner mit einer Drehachse versehen ist, die dem ersten Drehanbringungsloch entspricht, wobei die erste Drehachse drehbar im ersten Drehanbringungsloch angebracht ist.

9. Getränkebrühstruktur nach Anspruch 8, wobei eine Seite des Gleitblocks (121) entfernt von der Bodenplatte (211) mit einem Rückhalteabschnitt (214) versehen ist und eine Seite des Klemmelement (220) entfernt von der Trägerplatte (120) an dem Rückhalteabschnitt (214) anliegt, wenn das Klemmelement am zweiten Führungsabschnitt (820) anliegt.

10. Getränkebrühstruktur nach Anspruch 8, ferner umfassend ein Quetschelement (970); wobei das Quetschelement (970) in Eins-zu-eins-Beziehung mit der Halterung (210) steht und das Quetschelement (970) umfasst:
einen Quetschabschnitt (971), der an einem Ende der Trägerplatte (120) angeordnet ist, das von dem Halterungsraum (130) entfernt ist, wobei der Quetschabschnitt (971) sich wenigstens teilweise in der ersten Richtung erstreckt; und
einen Verbindungsabschnitt (972), wobei ein Ende des Verbindungsabschnitts (972) mit dem Quetschabschnitt (971) verbunden ist und das andere Ende des Verbindungsabschnitts (972) mit der Trägerplatte (120) verbunden ist;
wobei der Quetschabschnitt (971) dazu konfiguriert ist, an einem Ende der Bodenplatte (211) anzuliegen, das von dem Halterungsraum (130) entfernt ist, wenn sich das Klemmelement (220) am ersten Führungsabschnitt (810) entlang bewegt.

11. Getränkebrühstruktur nach einem der Ansprüche 1 bis 10, ferner umfassend eine Verbindungsstange (230); wobei ein Ende der Verbindungsstange (230) drehbar an der Einspritzbaugruppe (300) angebracht ist und das andere Ende der Verbindungsstange (230) drehbar am Klemmelement (220) angebracht ist.

12. Getränkebrühstruktur nach einem derAnsprüche 1 bis 10, wobei ein Ende des Klemmelements (220) nahe der Mitte des Halterungsraums (130) ferner mit einer Klemmnut (224) versehen ist, die zum Halten einer Kapsel konfiguriert ist.

13. Getränkebrühstruktur nach Anspruch 12, wobei das Klemmelement (220) umfasst:
einen Fußabschnitt (221), wobei ein Ende des Fußabschnitts (221) nahe dem Halterungsraum (130) mit der Klemmnut (224) versehen ist;
einen Verbindungsabschnitt (222), wobei ein Ende des Verbindungsabschnitts (222) mit dem Fußabschnitt (221) verbunden ist und das andere Ende des Verbindungsabschnitts (222) sich in der Richtung hin zum Fuß (110) erstreckt; und
eine erste Drehachse (223), wobei die erste Drehachse (223) an einem Ende des Verbindungsabschnitts (222) angeordnet ist, das von dem Fußabschnitt (221) entfernt ist, wobei das Klemmelement (220) durch die erste Drehachse (223) drehbar mit der Halterung (210) verbunden ist;
wobei sich der Verbindungsabschnitt (222) in einer Richtung, in welcher der Fußabschnitt (221) auf die erste Drehachse (223) zeigt, allmählich an die Trägerplatte (120) annähert.

14. Getränkemaschine, umfassend die Getränkebrühstruktur nach einem der Ansprüche 1 bis 13.

## Revendications

1. Une structure à infusion de boissons, comprenant:
un bâti (100), comprenant une base (110) et des plaques de soutien (120) agencées sur deux côtés opposés de la base (110), les plaques de soutien (120) et la base (110) enfermant un espace de montage (130) ;
un ensemble d'injection (300), agencé dans l'espace de montage (130), et étant proximal ou distal de la base (110) dans une première direction ; et
un ensemble de serrage (200), une paire d'ensembles de serrage (200) étant agencée respectivement sur les deux plaques de soutien (120) et déplaçable dans une première direction, l'ensemble de serrage (200) comprenant une monture (210), un élément de serrage (220), et une tige de raccordement (230); dans laquelle la monture coopère de façon coulissante avec les plaques de soutien dans la première direction, une extrémité de l'élément de serrage (220) est raccordée de façon rotative à la monture (210) et l'autre extrémité de l'élément de serrage (220) est raccordée de façon rotative à la tige de raccordement (230), et une extrémité de la tige de raccordement (230) est raccordée de façon rotative à l'élément de serrage (220) et l'autre extrémité de la tige de raccordement (230) est raccordée de façon rotative à l'ensemble d'injection (300);
dans laquelle lorsque l'ensemble d'injection (300) se déplace dans la direction proximale de la base (110) le long de la première direction, une extrémité de l'élément de serrage (220) proximale de l'ensemble d'injection (300) peut être ouverte dans une direction distale de l'espace de montage (130) ;
**caractérisée en ce que** lorsque l'ensemble d'injection (300) se déplace dans la direction proximale de la base (110) le long de la première direction jusqu'à l'ensemble de serrage (200) et est accolé contre la base (110), l'extrémité de l'élément de serrage (220) proximale de l'ensemble d'injection (300) peut être ouverte dans la direction distale de l'espace de montage (130).

2. Une structure à infusion de boissons selon la revendication 1, dans laquelle un côté de la base (110) faisant face à l'espace de montage (130) est muni d'un support de godet (111), une paroi latérale du support de godet (111) étant munie d'une rampe de guidage (112) pointant depuis l'extrémité du support de godet (111) distale de la base (110) vers l'extrémité de la base (110), la rampe de guidage (112) étant graduellement distale du centre du support de godet (111) ;
dans laquelle lorsque l'ensemble de serrage (220) est accolé contre la rampe de guidage (112), l'extrémité de l'élément de serrage (220) proximale de l'ensemble d'injection (300) peut être ouverte dans la direction distale de l'espace de montage (130).

3. Une structure à infusion de boissons selon la revendication 1, dans laquelle la monture (210) comprend une plaque de fond (211) et un bloc coulissant (212), et la plaque de soutien (120) est munie d'une glissière (121) appariée au bloc coulissant (212) et se prolongeant dans la première direction, le bloc coulissant (212) passant à travers la glissière (121) pour entrer dans l'espace de montage (130); et
un des éléments de serrage (220) et le bloc coulissant (212) sont en outre munis d'un premier logement de charnière, et l'autre élément de serrage (220) et le bloc coulissant (212) sont en outre munis d'un premier arbre rotatif correspondant au premier logement de charnière, le premier arbre rotatif étant articulé au premier logement de charnière.

4. Une structure à infusion de boissons selon la revendication 1, comprenant en outre un élément élastique (240) ; dans laquelle deux extrémités de l'élément élastique (240) sont respectivement accolées contre un côté de l'élément de serrage (220) proximal de la plaque de soutien (120) et la monture (210) ;
dans laquelle un côté du bloc coulissant (121) distal de la plaque de fond (211) est muni d'une partie de retenue (214), et un côté de l'élément de serrage (220) distal de la plaque de soutien (120) est accolé contre la partie de retenue (214).

5. Une structure à infusion de boissons selon la revendication 4, dans laquelle l'élément élastique (240) est un ressort.

6. Une structure à infusion de boissons selon la revendication 4, dans laquelle une extrémité de la plaque de soutien proximale de l'espace de montage (130) est munie d'une plaque de guidage (800) se prolongeant dans la première direction, une extrémité de la plaque de guidage (800) distale de la plaque de soutien (120) étant munie d'une première partie de guidage (810) ;
dans laquelle la distance entre la première partie de guidage (810) et la plaque de soutien (120) est inférieure sur l'extrémité distale de l'ensemble d'injection (300) à celle sur l'extrémité proximale de l'ensemble d'injection (300) ; et
la première partie de guidage (810) est configurée pour commander à l'extrémité de l'élément de serrage (220) proximale de l'ensemble d'injection (300) de s'ouvrir dans la direction distale de l'espace de montage (130) lorsque l'élément de serrage (220) se déplace le long de la première partie de guidage (810).

7. Une structure à infusion de boissons selon la revendication 6, dans laquelle l'extrémité de la plaque de guidage (800) distale de la plaque de soutien (120) est en outre munie d'une deuxième partie de guidage (820) parallèle à la plaque de soutien (120), la première partie de guidage étant agencée entre la deuxième partie de guidage (820) et la base (110) et raccordée à la deuxième partie de guidage (820); et
l'élément de serrage (220) est accolé contre la première partie de guidage (810) ou la deuxième partie de guidage (820) pendant le mouvement.

8. Une structure à infusion de boissons selon la revendication 1, dans laquelle la monture (210) comprend une plaque de fond (211) et un bloc coulissant (212), et la plaque de soutien (120) est munie d'une glissière (121) appariée au bloc coulissant (212) et se prolongeant dans la première direction, le bloc coulissant (212) passant à travers la glissière (121) pour entrer dans l'espace de montage (130) ; et
un des éléments de serrage (220) et le bloc coulissant (212) sont en outre munis d'un premier logement de charnière, et l'autre élément de serrage (220) et le bloc coulissant (212) sont en outre munis d'un premier arbre rotatif correspondant au premier logement de charnière, le premier arbre rotatif étant articulé au premier logement de charnière.

9. Une structure à infusion de boissons selon la revendication 8, dans laquelle le côté du bloc coulissant (121) distal de la plaque de fond (211) est muni d'une partie de retenue (214), et le côté de l'élément de serrage (220) distal de la plaque de soutien (120) est accolé contre la partie de retenue (214) lorsque l'élément de serrage est accolé contre la deuxième partie de guidage (820)

10. Une structure à infusion de boissons selon la revendication 8, comprenant en outre un élément de sertissage (970) ; dans laquelle l'élément de sertissage (970) correspond un-à-un à la monture (210), et l'élément de sertissage (970) comprend :
une partie de sertissage (971), agencée sur l'extrémité de la plaque de soutien (120) distale de l'espace de montage (130), la partie de sertissage (971) se prolonge au moins partiellement dans la première direction ; et
une partie de raccordement (972), une extrémité de la partie de raccordement (972) étant raccordée à la partie de sertissage (971), et l'autre extrémité de la partie de raccordement (972) étant raccordée à la plaque de soutien (120);
dans laquelle la partie de sertissage (971) est configurée pour s'accoler contre l'extrémité de la plaque de fond (211) distale de l'espace de montage (130) lorsque l'élément de serrage (220) se déplace le long de la première partie de guidage (810).

11. Une structure à infusion de boissons selon l'une quelconque des revendications 1 à 10, comprenant en outre une tige de raccordement (230) ; dans laquelle une extrémité de la tige de raccordement (230) est articulée à l'ensemble d'injection (300), et l'autre extrémité de la tige de raccordement (230) est articulée à l'élément de serrage (220).

12. Une structure à infusion de boissons selon l'une quelconque des revendications 1 à 10, dans laquelle l'extrémité de l'élément de serrage (220) proximale du centre de l'espace de montage (130) est en outre munie d'une gorge de serrage (224) configurée pour monter une capsule.

13. Une structure à infusion de boissons selon la revendication 12, dans laquelle l'élément de serrage (220) comprend:
une partie de base (221), l'extrémité de la partie de base (221) proximale de l'espace de montage (130) étant munie de la gorge de serrage (224);
une partie de raccordement (222), une extrémité de la partie de raccordement (222) étant raccordée à la partie de base (221), et l'autre extrémité de la partie de raccordement (222) se prolongeant dans la direction proximale de la base (110); et
un premier arbre rotatif (223), le premier arbre rotatif (223) étant agencé sur l'extrémité de la partie de raccordement (222) distale de la partie de base (221), l'élément de serrage (220) étant raccordé de façon rotative à la monture (210) par le premier arbre rotatif (223);
dans laquelle dans la direction dans laquelle la partie de base (221) pointe vers le premier arbre rotatif (223), la partie de raccordement (222) est graduellement proximale de la plaque de soutien (120).

14. Un distributeur de boisson, comprenant la structure à infusion de boisson telle que définie à l'une quelconque des revendications 1 à 13.
